# EUROPÄISCHE PATENTANMELDUNG

(11) **EP 0 836 972 A1**
(43) Veröffentlichungstag der Anmeldung: **22.04.1998**
(21) Anmeldenummer: 97250246.2
(22) Anmeldetag: 23.08.1997
(51) Int. Cl.: B60R 25/10, B60R 11/02

(54) **Einrichtung zur Kenntlichmachung eines Einbruches in einem Kraftfahrzeug**

(30) Priorität: 28.08.1996 DE 19636251
(71) Anmelder: Wittchow, Dieter, 13409 Berlin (DE)
(72) Erfinder: Wittchow, Dieter, 13409 Berlin (DE)

(57) **Zusammenfassung**

Einrichtung zur Kenntlichmachung eines Einbruches in ein Kraftfahrzeug, bestehend aus einem Sender, der, in dem Kraftfahrzeug untergebracht, auf einen Einbruch anspricht und bei Einbruch erste Signale aussendet, und einem mobilen Empfänger, der die ersten Signale empfängt und bei Signalempfang zweite, von einer Person wahrnehmbare Signale abgibt.
Die Erfindung besteht darin, daß der Sender, entsprechend klein ausgebildet,
a) in einem Autoradio nicht entfernbar und nicht manipulierbar angebracht ist, oder
b) in dem Kraftfahrzeug von außen gut sichtbar, vorzugsweise an der Windschutzscheibe oder in diese fest eingeschmolzen, nicht zerstörungsfrei entfernbar und nicht manipulierbar angebracht ist
und nach dem Einbruch eine längere Zeit, insbesondere einige Tage lang, Signale aussendet derart, daß eine Auffindung des Senders möglich ist.
Auf diese Weise wird erreicht, daß das Kraftfahrzeug bzw. das Autoradio auch nach dem Einbruch ausfindig gemacht werden kann.

## Beschreibung

Die Erfindung bezieht sich auf eine Einrichtung zur Kenntlichmachung eines Einbruches in ein Kraftfahrzeug, bestehend aus einem Sender, der, in dem Kraftfahrzeug untergebracht, auf einen Einbruch anspricht und bei Einbruch erste Signale aussendet, und einem mobilen Empfänger, der die ersten Signale empfängt und bei Signalempfang zweite, von einer Person wahrnehmbare Signale abgibt. Diese können akustischer, visueller und/oder vibratorischer Natur sein.

Bekannte auf dem Markt befindliche Einrichtungen dieser Art sind derart ausgebildet, daß der Sender irgendwo, jedoch nicht im Autoradio oder an der Windschutzscheibe angebracht ist, z.B. unter dem Armaturenbrett. Seine Größe ist auch solcher Art, daß sie einen Einbau in ein Autoradio oder eine Anbringung an der Windschutzscheibe nicht zuließe. Diese Einrichtungen haben den Nachteil, daß eine Auffindung des Senders (und damit des Autoradios und/oder des Kraftfahrzeugs) nicht mehr möglich ist, wenn es dem Einbrecher aufgrund der leichten Zugänglichkeit und Manipulierbarkeit gelingt, unbemerkt und unerkannt den Sender außer Betrieb zu setzen, beispielsweise durch einfaches Abbrechen oder Kurzschließen der durchweg verwendeten Außenantennen.

Der Erfindung liegt die Aufgabe zugrunde, diese Nachteile zu vermeiden und die eingangs bezeichnete Erfindung derart auszubilden, daß der Sender (und damit das Kraftfahrzeug bzw. das Autoradio) im Anschluß an einen Einbruch ausfindig gemacht werden kann.

Eine erste Lösung dieser Aufgabe besteht darin, daß der Sender, entsprechend klein ausgebildet, in einem Autoradio nichtentfernbar und nicht manipulierbar angebracht ist und nach dem Einbruch eine längere Zeit, insbesondere einige Tage lang, Signale aussendet derart, daß eine Auffindung des Senders möglich ist.

Auf diese Weise wird erreicht, daß das Kraftfahrzeug bzw. das Autoradio auch nach dem Einbruch ausfindig gemacht werden kann.

Eine zweite Lösung der o.g. Aufgabe besteht darin, daß der Sender, entsprechend klein ausgebildet, in dem Kraftfahrzeug von außen gut sichtbar, vorzugsweise an der Windschutzscheibe oder in diese fest eingeschmolzen, nicht zerstörungsfrei entfernbar und nicht manipulierbar angebracht ist und nach dem Einbruch eine längere Zeit, insbesondere einige Tage lang, Signale aussendet derart, daß eine Auffindung des Senders möglich ist.

Auf diese Weise wird erreicht, daß das Kraftfahrzeug auch nach dem Einbruch ausfindig gemacht werden kann. Hinzu kommt, daß durch die gute Erkennbarkeit des Senders von außen auf potentielle Einbrecher eine abschreckende Wirkung ausgeübt wird, die mit Plaketten, Hinweisaufklebern auf Alarmanlagen oder Attrappen kaum erreichbar ist, so daß unter Umständen garnicht erst eingebrochen wird. Die gewaltsame Außerbetriebsetzung des Senders durch Herausbrechen aus beispielsweise der Windschutzscheibe muß zwangsläufig von außen gut erkennbare Beschädigungen verursachen, so daß ein gestohlenes Fahrzeug auch im Nachhinein erkennbar ist. Außerdem hat die direkte Anbringung des Senders an beispielsweise der Windschutzscheibe gegenüber getrennter Anbringung von Hinweis und Alarmanlage den Vorteil der Vereinfachung/Verbilligung.

Die Lehren gemäß den Ansprüchen 1 und 2 bedeuten, daß der Sender (von einem Einbrecher) nicht manipulierbar ist, und zwar weder durch Kappen oder Überbrücken von Anschlüssen noch auf eine andere Art und Weise, daß in dem Sender eine Antenne untergebracht ist, daß er eine Batterie enthält und daß er derart gekapselt und mit seiner Umgebung fest verbunden ist, so daß eine Außerbetriebsetzung des Senders mit größeren Schäden am Autoradio bzw. an der Windschutzscheibe einhergeht, deren Beseitigung zeitaufwendig und kostspielig, verbunden mit der Gefahr der Entdeckung der Straftat ist. Der Sender ist mit seinen Komponenten als vollkommen eigenständiges Modul ausgebildet. Als Komponenten sind neben den bereits erwähnten Elementen Antenne und Batterie auch mehr oder weniger aufwendige Auswertelogiken für die Alarmauslösung zu verstehen. Im einfachsten Fall könnte der Sender mittels Flip/Flop über den Türkontakt der Innenbeleuchtung des Kraftfahrzeugs an die Versorgungsspannung gelegt werden und so zum Senden gebracht werden. Ein ahnungsloser Gelegenheitseinbrecher bemerkt unter Umständen nicht einmal die Auslösung des Alarms über Funk, denn es handelt sich vorliegend um den sog. "stillen Alarm", so daß die Festsetzung bzw. Verfolgung des Täters möglich ist. Meistens genügt es, den Täter zu vertreiben, wenn dieser unmittelbar nach dem Eindringen durch direktes Ansprechen überrumpelt wird.

### Weiterbildungen der Erfindung sind:

* Daß der Sender nur durch den rechtmäßigen Besitzer desselben ein- und ausschaltbar ist, z.B. mit einer Funk-Fernbedienung.
   Auf diese Weise wird erreicht, daß der Sender nicht durch den Täter mittels "verstecktem Schalter" oder manipulierbarem Schlüsselschalter vor dem Auslösen entschärft werden kann.
* Daß nach dem Einbruch der Sender durch den Einbrecher nur durch Zerstörung zum Nichtsenden gebracht werden kann und daß dann auch eine Zerstörung der Umgebung, z.B. des Radios bzw. Teile davon oder der Windschutzscheibe, erfolgt.
   Auf diese Weise wird erreicht, daß sich das Stehlen von unbrauchbar gewordenen Autoradios schon deshalb nicht mehr lohnt, weil Reparaturen einerseits kostspielig sind und andererseits die Gefahr der nachträglichen Entdeckung droht. Genau so verhält es sich bei den zwangsläufig von außen unübersehbaren Beschädigungen der Windschutzscheibe.
* Daß der Sender auf eine Änderung im Kraftfahrzeug bei Einbruch, z.B. einen Spannungsabfall und /oder bei Ausbau des Radios, z.B. bei Kappen der Kabel, anspricht.
   Auf diese Weise wird erreicht, daß der Sender selbst dann anspricht, wenn der Einbrecher mutmaßt, eine Auslösung verhindert zu haben.
* Daß die vom Sender ausgesendeten Trägerfrequenzen, die insbesondere im Mega-Hertz bis Giga-Hertz-Bereich liegen, digital (oder analog) kodiert sind.
   Auf diese Weise wird erreicht, daß durch hohe Trägerfrequenzen die Übertragung bei verhältnismäßig geringer Sendeleistung begünstigt wird und durch insbesondere digitale Kodierung die Sicherheit gegenüber Manipulationen oder Fehlalarmauslösungen erheblich erhöht wird.
* Daß das Gehäuse des Senders ganz oder teilweise als Antenne ausgebildet ist.
   Auf diese Weise wird erreicht, daß der Sender nicht etwa durch Unterbrechung der Antenne außer Betrieb gesetzt wird. Außerdem dient diese Maßnahme der eigenständigen Modultechnik.
* Daß bei Inbereitschaftschaltung und /oder Alarmauslösung des Senders das Radio automatisch unbrauchbar wird.
   Auf diese Weise wird erreicht, daß herkömmliche Diebstahlsicherungen an auf dem Markt befindlichen Autoradios eingespart werden können. Die Unbrauchbarschaltung des mit einem Alarmmodul ausgerüsteten Autoradios ist mittels einem zusätzlichen billigen Elektronikschalter realisierbar.
* Daß bei Inbereitschaftschaltung des Senders automatisch eine Überprüfung der Schließung der Türen, des Kofferraums und der Fenster ggf. des Schiebedachs des Kraftfahrzeugs über eine bidirektionale Funkübertragung bewirkt werden kann, und zwar jederzeit auch als nachträgliche Kontrolle mit Quittierung an den Empfänger.
   Auf diese Weise wird erreicht, daß der Besitzer eines Kraftfahrzeugs sich beispielsweise noch aus dem Fernsehsessel heraus vergewissern kann, ob alles verschlossen ist. Denkbar wäre es, die versäumte Schließung per Funksignal über die Zentralverriegelung nachzuholen.

Es kann sinnvoll sein, daß im Falle eines Einbruchs zusätzlich "lauter Alarm" durch Anschließung einer Alarmanlageherkömmlicher Art am Fahrzeug selbst erfolgt. Dies kann eine eine eigenständige Einrichtung oder ein Erweiterungsmodul der dargestellten Erfindung sein. Als weiteres Modul wird die Wegfahrsperre bestimmt.

Die Erfindung kann nach den heute verfügbaren Herstellungstechniken als Hybridmodul mit kleinsten Abmessungen oder sogar als Analog/Digital-Chip mit wenigen externen Ergänzungsbauteilen realisiert werden. Selbst die Pufferbatterie ist integrierbar. Unter diesem Gesichtspunkt ergibt sich bei großen Stückzahlen ein Billigmodul, daß bereits serienmäßig beim Autohersteller zur Anwendung kommen sollte. Autoradioherstellern eröffnet sich durch die Erweiterung mit dem Alarmmodul ein zusätzlicher Markt.

## Patentansprüche

1. Einrichtung zur Kenntlichmachung eines Einbruches in ein Kraftfahrzeug, bestehend aus einem Sender, der, in dem Kraftfahrzeug untergebracht, auf einen Einbruch anspricht und bei Einbruch erste Signale aussendet, und einem mobilen Empfänger, der die ersten Signale empfängt und bei Signalempfang zweite, von einer Person wahrnehmbare Signale abgibt, dadurch gekennzeichnet, daß der Sender, entsprechend klein ausgebildet, in einem Autoradio nicht entfernbar und nicht manipulierbar angebracht ist und nach dem Einbruch eine längere Zeit, insbesondere einige Tage lang, Signale aussendet derart, daß eine Auffindung des Senders möglich ist.

2. Einrichtung zur Kenntlichmachung eines Einbruches in ein Kraftfahrzeug, bestehend aus einem Sender, der, in dem Kraftfahrzeug untergebracht, auf einen Einbruch anspricht und bei Einbruch erste Signale aussendet, und einem mobilen Empfänger, der die ersten Signale empfängt und bei Signalempfang zweite, von einer Person wahrnehmbare Signale abgibt, dadurch gekennzeichnet, daß der Sender , entsprechend klein ausgebildet, in dem Kraftfahrzeug von außen gut sichtbar, vorzugsweise an der Windschutzscheibe oder in diese fest eingeschmolzen, nicht zerstörungsfrei entfernbar und nicht manipulierbar angebracht ist und nach dem Einbruch eine längere Zeit, insbesondere einige Tage lang, Signale aussendet derart, daß eine Auffindung des Senders möglich ist.

3. Einrichtung nach Anspruch 1 oder 2, dadurch gekennzeichnet, daß der Sender nur durch den rechtmäßigen Besitzer desselben ein- und ausschaltbar ist, z.B. mit einer Funk-Fernbedienung.

4. Einrichtung nach einem der Ansprüche 1 bis 3, dadurch gekennzeichnet, daß nach dem Einbruch der Sender durch den Einbrecher nur durch Zerstörung zum Nichtsenden gebracht werden kann und daß dann auch eine Zerstörung der Umgebung, z.B. des Radios bzw. Teile davon oder der Windschutzscheibe, erfolgt.

5. Einrichtung nach einem der Ansprüche 1 bis 4, dadurch gekennzeichnet, daß der Sender auf eine Änderung im Kraftfahrzeug bei Einbruch, z.B. einen Spannungsabfall und /oder bei Ausbau des Radios, z.B. bei Kappen der Kabel, anspricht.

6. Einrichtung nach einem der Ansprüche 1 bis 5, dadurch gekennzeichnet, daß die vom Sender ausgesendeten Trägerfrequenzen, die insbesondere im Mega-Hertz bis Giga-Hertz-Bereich liegen, digital (oder analog) kodiert sind.

7. Einrichtung nach einem der Ansprüche 1 bis 6, dadurch gekennzeichnet, daß das Gehäuse des Senders ganz oder teilweise als Antenne ausgebildet ist.

8. Einrichtung nach Anspruch 1, dadurch gekennzeichnet, daß bei Inbereitschaftschaltung und /oder Alarmauslösung des Senders das Radio automatisch unbrauchbar wird.

9. Einrichtung nach einem der Ansprüche 1 bis 8, dadurch gekennzeichnet, daß bei Inbereitschaftschaltung des Senders automatisch eine Überprüfung der Schließung der Türen, des Kofferraums und der Fenster ggf. des Schiebedachs des Kraftfahrzeugs über eine bidirektionale Funkübertragung bewirkt werden kann, und zwar jederzeit auch als nachträgliche Kontrolle mit Quittierung an den Empfänger.
